# EUROPEAN PATENT APPLICATION

(11) **EP 4 516 477 A1**
(43) Date of publication of application: **05.03.2025**
(21) Application number: 24197763.6
(22) Date of filing: 30.08.2024
(51) Int. Cl.: B29C 33/12, B29C 39/10

(54) **METHOD OF MANUFACTURING A PREFABRICATED INSULATED PANEL OR SILL**

(30) Priority: 30.08.2023 GB 202313179
(71) Applicant: Sillestica Limited, Tetbury, Gloucestershire GL8 8JG (GB)
(72) Inventor: Stack, Luke, Andoversford, GL54 4JN (GB); O'Neill, Paul, Tramore, X91 E4E9 (IE); Asiodu, Ifeanyi, Tetbury, GL8 8JG (GB)
(74) Representative: Games, Robert Harland

(57) **Abstract**

A method 100 of manufacturing a prefabricated insulated panel or sill comprises the steps of inserting an insulation board 12 inside a mould 10, retaining the insulation board 12 in a position inside the mould 10 using a retaining means 16, pouring a composite material including a plastics resin mixed with one or more of silica sand, crushed marble and marble powder, inside the mould 10 to encase the insulation board 12 within an outer shell 14, and removing the retaining means 16.

## Description

The present invention relates to a method of manufacturing a prefabricated insulated panel or sill.

### BACKGROUND TO THE INVENTION

Prefabricated panels and sills are used for various purposes in the construction sector. Typically, sills may be constructed using concrete and/or stone. The use of these materials presents a range of issues. Stone and concrete sills are bulky, heavy, break easily, are expensive, and have a relatively long lead time for production. Furthermore, the weight of these panels requires the use of machinery to move them and results in higher transportation costs.

Furthermore, concrete does not insulate heat as effectively as insulation such as expanded polystyrene (EPS). It has a relatively high thermal conductivity (K-value) of typically between 1.32 W/m.K and 1.95 W/m.K. EPS, for example, could have a thermal conductivity as low as 0.035 W/m K. There is interest in forming panels with insulation to reduce heat loss in buildings. This is particularly the case at openings such as windows and doors where it is more difficult to apply insulation.

A common solution is to apply an oversill. An oversill provides external insulation over a window sill. However, resin is required to protect the oversill from weathering and corrosion. Acid in the resin tends to attack the expanded polystyrene (EPS) over time, resulting in long term degradation of the EPS and a reduction in the thermal insulation it provides.

It is an object of the present invention to reduce or substantially obviate the aforementioned problems.

### STATEMENT OF INVENTION

According to the present invention there is provided a method of manufacturing a prefabricated insulated panel or sill comprising the steps of:
inserting an insulation board inside a mould;
retaining the insulation board in a position inside the mould using a retaining means;
pouring a composite material including a plastics resin mixed with one or more of silica sand, and crushed marble, inside the mould to encase the insulation board within an outer shell;
removing the retaining means.

The method is significantly easier than methods currently known and cheaper to perform, can be done without sophisticated equipment reducing capital costs and allowing the method to be performed on site, reducing transportation costs. The method also allows for considerably lower lead times for manufacturing the prefabricated sills and/or panels.

A significant advantage of using an insulation board is that it is pre-formed. The U-value is known, and products, manufactured have near identical thermal conductivity.

A panel or sill manufactured from the method above may have a U-value of approximately 1.3 W/m²K. The mixture of marble and/or silica sand and insulation provides a cooling effect in warmer temperatures. The strength of the panel or sill may be comparable to concrete.

The panel may be significantly lighter than concrete panels or sills, for example, 70% lighter. This allows the panel or sill to be moved without machinery and further reduces transportation costs. The panel or sill may be safely moveable by a single person.

The reduction of concrete and the ease of manufacture means that panels and sills made from this method can be significantly cheaper than alternative products on the market.

Encasing the board in the outer shell ensures there is no exposed insulation.

The mould may comprise stainless steel. For example, the mould may be made from stainless steel. The stainless steel provides rigidity and uniformity between the prefabricated sills and/or panels produced.

The mould may be sized for fabricating panels or sills at set lengths. For example, for manufacturing sills, the mould may have a length of between 3 metres to 4 metres.

The mould may comprise at least one divider for dividing the mould into a plurality of sections. The divider may allow the size of the mould may be adjustable to control the size of the sills or panels. The divider may be used to manufacture multiple panels and/or sills at once. The at least one divider may have bevelled edges.

The mould may comprise one or more attachment means disposed along a length of the mould for attaching the at least one divider. The size of the mould may be adjusted to one or more discrete lengths. The at least one divider may comprise rubber.

A release coating may be applied to the mould before pouring the composite material inside the mould. The release coating may facilitate the removal of the panel or sill from the mould.

The retaining means may include at least one pin penetrating the mould and the insulation board. The at least one pin may be removed from the mould before the composite material has set.

The pouring may be performed by an automated pouring machine. The automated pouring machine may pull in the resin, silica sand and/or crushed marble via a hopper.

After the composite material is poured into the mould, the mould may be vibrated to level the resin.

The composite material may be at a temperature of at least 15°C. A temperature of at least 15°C facilitates the setting of the composite material. The composite material may be cured for at least 72 hours.

The prefabricated panel or sill may be removed from the mould at least 30 minutes after pouring the composite material inside of the mould.

The outer shell may have a thickness of between 5 mm and 7 mm.

The insulation board may comprise expanded plastics foam. The expanded plastics foam may be a biofoam. The insulation board may include a protective cover to protect the insulation board from the resin. The protective cover may be a plastic film.

The protective cover may be coated in the protective cover. The protective cover or plastic film may include a layer of PVA glue. The protective cover or plastic film may include a layer of an epoxy primer.

The insulation board may be wrapped in the protective cover. The insulation board may be wrapped in a plastic film.

The protective cover may be clingfilm. The insulation board may be sealed in clingfilm prior to being inserted into the mould.

The plastics resin may include a polyester resin. The resin may have anti-fungal properties. The plastics resin may include a catalyst for facilitating setting of the resin. The catalyst may be a methyl ethyl ketone peroxide. The plastics resin may include a pigment. Advantageously, the pigment allows the panel or sill to be manufactured in different colours.

The composite material includes fibres. The fibres may include polymerised para-aramid fibre (e.g. Kevlar (RTM)). The panel or sill may be a bullet-proof security panel. The method may provide a protective bullet-proof panel. The bullet-proof panel may be lightweight and suitable for use in the field.

There may be provided a prefabricated insulated panel or sill comprising an insulated board fully encased in a composite material made by the method described above.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a flowchart of a method of manufacturing a prefabricated panel or sill;
Figure 2 shows a top view of a first embodiment of an insulation board in a mould;
Figure 3 shows a side view of a second embodiment of an insulation board in a mould; and
Figure 4 shows a front view of the mould of Figure 1.

### DESCRIPTION OF PREFERRED EMBODIMENTS

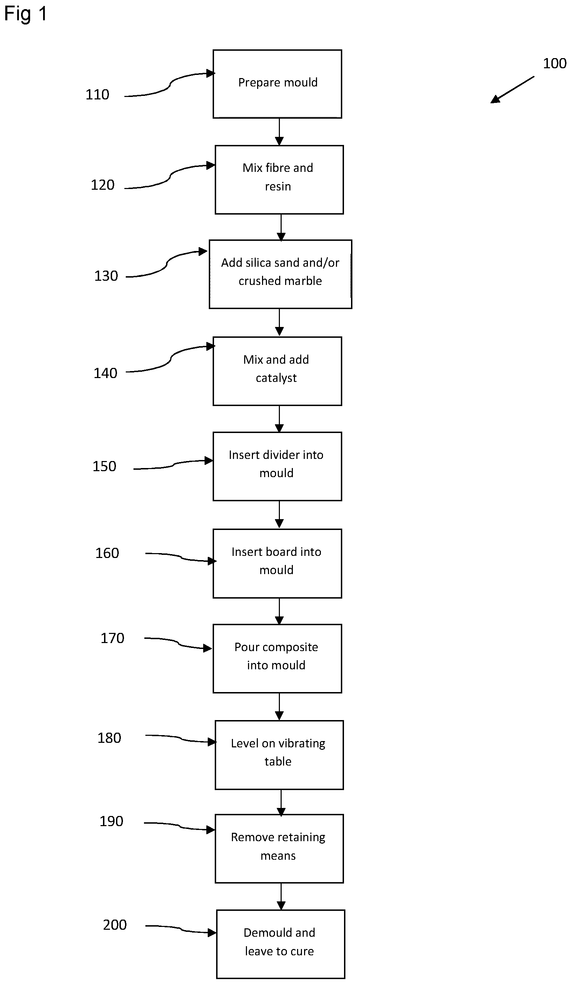

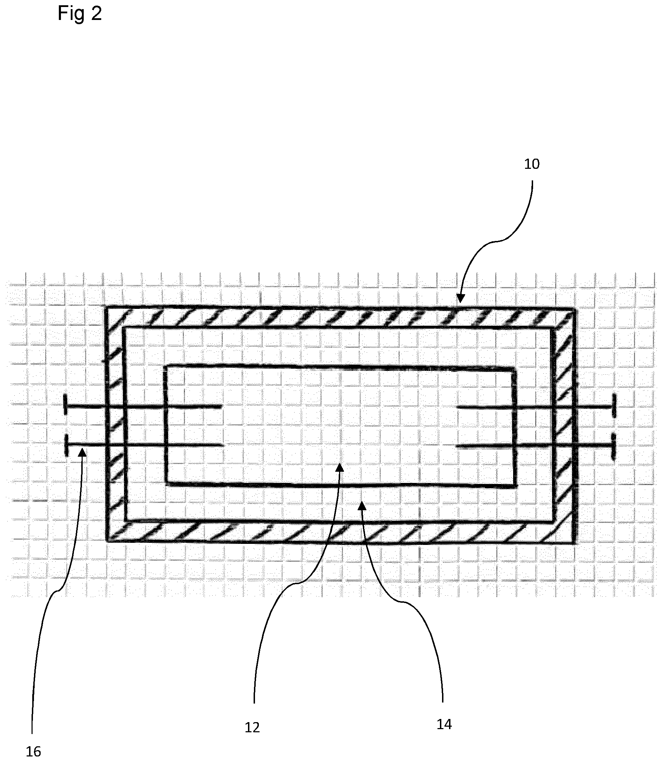

Referring firstly to Figure 1 a method of manufacturing a prefabricated panel or sill is generally indicated at 100. The method 100 allows for the manufacture of panels are sills having an insulation board core 12 encased in an outer shell 14 made from a composite material. The prefabricated sills or panels are formed in a mould 10. The mould 10 is described in more detail below with respect to Figures 2 to 4.

### Step 110

The mould 10 is prepared by applying an inside surface of the mould 10 with a release coating.

### Step 120

Fibres are mixed with a resin. In this embodiment, the fibres are polymerised para-aramid fibre. The resin includes a polyester resin.

### Step 130

The resin and fibre, pigment and one or both of silica sand and marble powder are pulled into an automated pouring machine via a hopper. The resin/fibre and pigment are introduced separately using tubes having a diameter of 3 mm to 10 mm.

### Step 140

The resin/fibre mix, pigment and one or both of silica sand and marble powder are mixed together to form a composite material. A catalyst is added. The catalyst includes methyl ethyl ketone peroxide.

### Step 150

One or more dividers 22 are inserted into the mould 10. The divider 22 extends from a front of the mould 10 to a back of the mould 10. The divider 22 is fixed in place by divider pins extending through the front and back of the mould 10 and into the divider 22. The divider 22 separates the mould 10 into a plurality of sections 26. The divider 22 can be used to control the length of the sill or panel produced.

### Step 160

The insulation board 12 is inserted into the mould 10. The insulation board 12 is made from a biofoam. The insulation board 12 is wrapped in clingfilm to protect the insulation board 12 from the resin.

In other embodiments, the insulation board 12 may be covered, wrapped, and/or coated in the protective cover. For example, the insulation board may be coated in a film of PVA glue or epoxy primer.

The insulation board 12 is retained in the mould 10 using a retaining means 16. In this embodiment, the retaining means 16 is a plurality of pins 16. A first set of pins is provided through a first side of the mould 10. The first set of pins penetrates a first side of the insulation board 12. A second set of pins is provided through a second side of the mould 10. The second set of pins penetrates a second side of the insulation board 12.

The retaining means 16 fixes the insulation board 12 in a position substantially central in the mould 10.

### Step 170

A resulting cavity surrounding the insulation board 12 is filled with the composite material to form the outer shell 14.

### Step 180

The mould 10 is transferred to a vibrating table to level out the composite material. The composite covers the insulation board 12. In other words, the insulation board 12 is fully encased in the outer shell 14.

### Step 190

The outer shell 14 is left to cure for approximately 30 minutes and then the retaining means is removed. In some embodiments, the holes left by the removal of the retaining means may be filled in with additional composite material.

### Step 200

The outer shell 14 is then left to cure for approximately 1 to 2 hours at which point the sill or panel is demoulded. The panel or sill is left to cure for a further period of at least 3 days.

Referring now to Figure 2, a top view of the insulation board 12 retained inside the mould 10 is shown. In this embodiment the prefabricated panel or sill is a sill. The mould 10 is made from stainless steel. The mould 10 is manufactured from stainless steel which provides improved rigidity compared to, for example, silicone moulds which have been found to be too flexible and lead to bulging in a centre of the panel or sill. In other words, the rigidity of the stainless steel mould 10 produces panels or sills with uniform, straight and/or parallel edges.

The sides of the mould 10 are slightly splayed, i.e., there is a small draft angle to allow the panel or sill to be removed from the mould 10.

The pins are provided on either side of the mould. In this embodiment, the pins are provided in pairs. The pins are provided through the mould 10 and penetrate the insulation board 12, as described above. The pins hold the insulation board 12 in the centre of the mould 10.

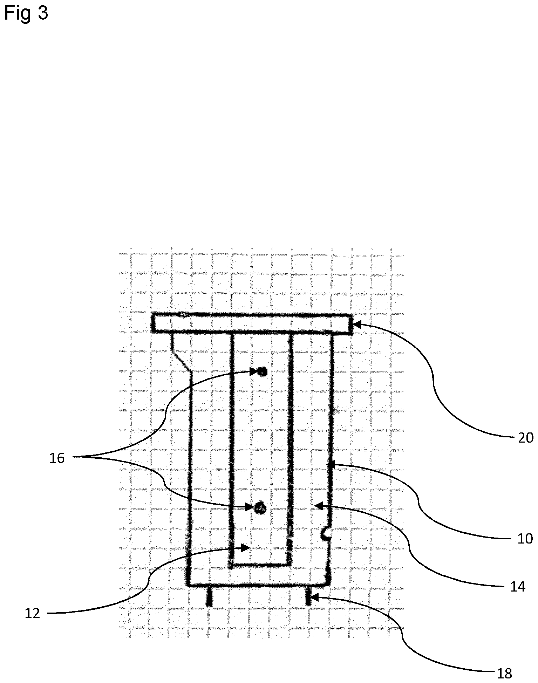

Referring now to Figure 3, a side view of a second embodiment of the mould 10 is shown. In this embodiment, a first pin of the pair of pins is provided above a second pin 16. The mould 10 includes a lip 20 at a top of the mould 10. The mould 10 has a plurality of feet 18 at the bottom of the mould 10.

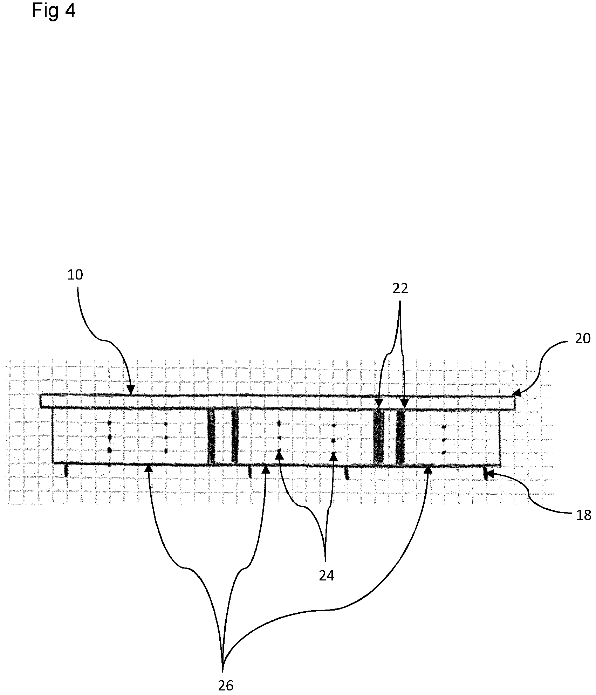

Referring now to Figure 4, a front view of the mould 10 of Figure 1 is shown. The mould 10 is approximately 3 metres long. Four dividers 22 are inserted into the mould 10. The dividers 22 separate the mould 10 into a plurality of sections as described above. The mould 10 includes apertures 24 through the front and back of the mould 10 for receiving the divider pins. The dividers 22 are provided in pairs. Any number of dividers 22 may be provided depending on the length of the desired panels or sills and/or the length of the mould 10.

A significant advantage of the method 100 and mould 10 described above is that prefabricated insulated panels or sills can be manufactured quickly and easily on site. Implementing the method 100 can reduce lead times for manufacturing the prefabricated sills and/or panels. The size of the prefabricated panels or sills can be controlled using the dividers 22 and are significantly lighter than concrete and stone alternatives. The insulation board 12 is pre-formed and manufactured have near identical thermal conductivity.

The embodiments described above are provided by way of example only, and various changes and modifications will be apparent to persons skilled in the art without departing from the scope of the present invention as defined by the appended claims.

## Claims

1. A method (100) of manufacturing a prefabricated insulated panel or sill comprising the steps of:
inserting an insulation board (12) inside a mould (10);
retaining the insulation board (12) in a position inside the mould (10) using a retaining means (16);
pouring a composite material including a plastics resin mixed with one or more of silica sand and crushed marble, inside the mould (10) to encase the insulation board within an outer shell (14);
removing the retaining means (16).

2. A method (100) as claimed in claim 1, in which the mould (10) comprises at least one divider (22) for dividing the mould into a plurality of sections (26).

3. A method (100) as claimed in claim 2, in which the at least one divider (22) has bevelled edges.

4. A method (100) as claimed in claim 2 or claim 3, in which the mould (10) comprises one or more attachment means disposed along a length of the mould (10) for attaching the at least one divider (22).

5. A method (100) as claimed in any of claims 2 to 4, in which the at least one divider (22) comprises rubber.

6. A method (100) as claimed in any preceding claim, in which the retaining means (16) includes at least one pin penetrating the mould (10) and the insulation board (12) and optionally in which the at least one pin is removed before the composite material has set.

7. A method (100) as claimed in any preceding claim, in which the insulation board (12) includes a protective cover to protect the insulation board from the resin.

8. A method as claimed in claim 7, in which the protective cover is a plastic film.

9. A method (100) as claimed in claim 8, in which the insulation board (12) is wrapped in the plastic film.

10. A method (100) as claimed in any preceding claim, in which the plastics resin includes one or more of a polyester resin, a catalyst for facilitating setting of the plastics resin, and a pigment.

11. A method (100) as claimed in claim 10, in which the catalyst is a methyl ethyl ketone peroxide.

12. A method (100) as claimed in any preceding claim, in which the composite material includes fibres.

13. A method (100) as claimed in claim 12, in which the fibres include polymerised para-aramid fibre.

14. A method (100) as claimed in claim 13, in which the panel or sill is a bullet-proof security panel.

15. A prefabricated insulated panel or sill comprising an insulated board fully encased in a composite material made by the method (100) of any preceding claim.
